# EUROPÄISCHE PATENTSCHRIFT

(11) **EP 4 493 423 B1**
(45) Veröffentlichungstag und Bekanntmachung des Hinweises auf die Patenterteilung: **09.12.2026**
(21) Anmeldenummer: 23701860.1
(22) Anmeldetag: 20.01.2023
(51) Int. Cl.: B60K 1/00

(54) **BATTERIETRANSPORTANHÄNGER UND DIESEN VERWENDENDES GESPANN**
BATTERY TRANSPORT TRAILER AND COMBINATION USING SAME
REMORQUE DE TRANSPORT DE BATTERIE ET COMBINAISON L'UTILISANT

(30) Priorität: 14.03.2022 DE 102022202516
(43) Veröffentlichungstag der Anmeldung: 22.01.2025
(73) Patentinhaber: Stellantis Auto SAS, 78300 Poissy (FR)
(72) Erfinder: SINGH, Tanuj, 65428 Rüsselsheim am Main (DE); LESSMEISTER, Roland, 65428 Rüsselsheim am Main (DE)
(74) Vertreter: PSIP
(86) Internationale Anmeldenummer: PCT/EP2023/051313
(87) Internationale Veröffentlichungsnummer: WO 2023/174597

(56) Entgegenhaltungen:
- CH-A5- 572 826
- CH-B1- 705 801
- DE-A1- 102015 200 636
- DE-A1- 102020 118 007
- DE-A1- 102020 207 506
- GB-A- 2 071 032

## Beschreibung

Die vorliegende Erfindung betrifft einen Batterietransportanhänger und ein Gespann, in dem ein solcher Batterietransportanhänger mit einem Zugfahrzeug kombiniert ist. Ein solcher Anhänger bzw. ein solches Gespann sind aus DE 10 2020 207 506 A1 bekannt.

Ferner ist aus der DE 10 2015 200 636 A1 ein Batterieträgermodul für ein Fahrmodul beschrieben, dass einer Batterie, Laufräder sowie eine in Gierrichtung ausgerichtete Kupplung zum Ankoppeln an das Fahrmodul aufweist.

Auch die CH 705 801 B1 beschreibt ein vergleichbares Gespann mit einem elektrisch angetriebenen Vorderwagen ankoppelbaren Hinterwagen mit einer Batterie.

Ein Batterietransportanhänger mit einem leistungsfähigen Batterieblock darauf ist ein einfaches und wirksames Mittel, um die Reichweite eines elektrisch betriebenen Zugfahrzeugs erheblich zu steigern. Der Batterieblock kann insbesondere nicht nur den für den augenblicklichen Fahrbetrieb des Zugfahrzeugs benötigten Strom liefern, sondern während der Fahrt noch eine eingebaute Batterie des Zugfahrzeugs laden, so dass er auf einer Fahrt nur solange mitgeführt werden muss, wie zum Aufladen der eingebauten Batterie nötig.

Viele Autofahrer haben noch nie ein Fahrzeug mit Anhänger gefahren. Die Länge des Anhängers muss bei Überholmanövern berücksichtigt werden, dies erhöht bei einem Fahrer, der nicht gewohnt ist, die Unfallgefahr. Außerdem erschwert der Anhänger das Rückwärtsfahren, was ebenfalls viele ungeübte Fahrer von der Verwendung eines solchen Anhängers abhält.

Ziel der vorliegenden Erfindung ist, einen Batterietransportanhänger bzw. ein Gespann mit einem Batterietransportanhänger anzugeben, die mit besserer Akzeptanz von Seiten der Anwender rechnen können.

Um das Ziel zu erreichen, wird einem Aspekt der Erfindung zufolge ein Batterietransportanhänger für ein Zugfahrzeug mit einem Chassis zum Tragen eines Batterieblocks und an dem Chassis befestigten Laufrädern vorgeschlagen, bei dem das Chassis eine zumindest in Gierrichtung drehfeste Kupplung zum Ankoppeln an ein Zugfahrzeug aufweist und jedes Laufrad mit dem Chassis über wenigstens eine Nachlaufachse verbunden ist. Der Batterieblock ist in Längsrichtung entlang des Chassis zwischen einer Fahrstellung und einer Ruhestellung verstellbar.

Die Kupplung verhindert ein Schwenken des Anhängers relativ zum Zugfahrzeug mit der Folge, dass der Anhänger sich beim Manövrieren ähnlich verhält wie ein aus einem Fahrzeugladeraum nach hinten überstehendes Frachtstück. Der Fahrer braucht daher beim Rückwärtsfahren allenfalls eine Verlängerung des Fahrzeughecks zu berücksichtigen, hat aber nicht damit zu rechnen, dass der vom Zugfahrzeug geschobene Anhänger in eine andere Richtung ausweicht als die, in die sich das Zugfahrzeug selber bewegt. Hinzu kommt, dass infolge der unterbundenen Schwenkbewegung der Abstand zwischen Zugfahrzeug und Anhänger deutlich verkürzt werden kann und somit das erfindungsgemäße Gespann deutlich kürzer baut als ein Gespann mit gierbeweglichem Anhänger.

Die Nachlaufachse verhindert ein Radieren der Laufräder beim Kurvenfahren, indem sie eine Gierbewegung der Laufräder relativ zum Chassis ermöglicht.

Insbesondere sollte in der Ruhestellung der Abstand des Batterieblocks vom Zugfahrzeug größer sein als in der Fahrstellung. Indem so die Last auf dem Stützrad in der Ruhestellung klein gehalten wird, wird diesem das Überwinden von Bodenunebenheiten erleichtert. Im angekoppelten Zustand hingegen ist es sinnvoll, durch Vorverlagern des Batterieblocks die auf das Fahrzeug übertragene Stützlast zu erhöhen, um die Kraftübertragung zwischen dem Zugfahrzeug und der Straße zu verbessern.

In der Ruhestellung sollte der Abstand des Batterieblocks vom Zugfahrzeug groß genug sein, damit er beim Öffnen einer Heckklappe des Zugfahrzeugs nicht im Weg ist. Wie groß dieser Abstand ist, hängt im Einzelfall von der Art der Hecklappe und deren Abmessungen ab. Um etwa die Bewegung einer zweiflügligen Hecktür eines Kleintransporters zu ermöglichen, sollte der Abstand wenigstens der halben Breite des Batterieblocks entsprechen.

Eine Bodenplatte, die in der Ruhestellung vor dem Batterieblock frei liegt, kann dem Benutzer den Zugang zu einem Laderaum des Zugfahrzeugs erleichtern, ohne dass dafür der Anhänger abgekoppelt werden muss.

Um die in Gierrichtung drehfeste Verbindung zum Zugfahrzeug zu realisieren, kann die Anhängerkupplung wenigstens zwei, vorzugsweise drei, Aufnahmen für je einen am Zugfahrzeug festen Kugelkopf umfassen. Sowohl bei dem Kugelkopf als auch bei den Aufnahmen dafür handelt es sich um marktgängige, und dementsprechend günstig verfügbare, seit langer Zeit erprobte Komponenten. Während zwei Aufnahmen - die, um ein hohes Gierdrehmoment übertragen zu können, vorzugsweise beiderseits einer Längsmittelebene des Anhängers angeordnet sein sollten - an sich ausreichend sind, um die Gierbewegung des Anhängers relativ zum Zugfahrzeug zu unterbinden, ist eine dritte Aufnahme sinnvoll, um einen bei vielen Fahrzeugen herkömmlicherweise vorhandene Anhängerkupplung nutzen und über diese zusätzlich Stützlast auf das Zugfahrzeug übertragen zu können.

Die Aufnahme kann ebenfalls von an sich üblicher Bauart sein, mit an den Kugelkopf anklemmbaren Backen und einem Hebel zum Verstellen der Backen zwischen einer Klemmstellung und einer den Kugelkopf freigebenden Stellung. Während jedoch bei einer herkömmlichen gierbeweglichen Anhängerkupplung der Hebel an einer sich von der Aufnahme nach hinten zum Anhänger erstreckenden Deichsel angebracht ist, ist er gemäß der Erfindung, um den Abstand zwischen Zugfahrzeug und Anhänger zu minimieren, vorzugsweise in Querrichtung versetzt neben der Aufnahme vorgesehen.

Ein an sich bekanntes Stützrad kann mit einem elektrischen Antrieb versehen sein, um ein Manövrieren des Anhängers im abgekoppelten Zustand zu erleichtern.

Um das Besteigen der Bodenplatte zu erleichtern, kann am Chassis eine Trittstufe vorgesehen sein.

Vorzugsweise ist die Bodenplatte an den Batterieblock angelenkt und beim Übergang in die Fahrstellung in eine aufrechte Stellung schwenkbar ist. So ist es nicht nötig, in der Fahrstellung den Batterieblock über die Bodenplatte zu schieben, und der Schwerpunkt des Batterieblocks kann niedrig gehalten werden.

Zum Schutz des Batterieblocks bei Kollisionen kann der Batterieblock eine hintere Stoßstange aufweisen, und der Batterieblock ist zumindest in der Fahrstellung vor der Stoßstange angeordnet. Um die Länge des Anhängers bei der Fahrt gering halten zu können, ist bevorzugt, dass der Batterieblock in der Ruhestellung über die Stoßstange nach hinten übersteht.

Um das Zugfahrzeug während der Fahrt versorgen und dessen Batterie laden zu können, sollte ein mit dem Batterieblock elektrisch verbundenes Ladekabel vorgesehen und lang genug sein um in an das Zugfahrzeug angekoppeltem Zustand mit einer Ladebuchse des Zugfahrzeugs verbindbar zu sein.

Um eine Schlagbewegung des Ladekabels bei der Fahrt zu unterbinden, kann das Ladekabel mit Haftelementen zum zeitweiligen Anheften an eine Karosserie des Zugfahrzeugs besetzt sein. Als Haftelemente kommen Magnete oder, vorzugsweise, Saugnäpfe in Betracht.

Der Anhänger kann mit einer Kabeltrommel versehen sein, von der das Ladekabel abwickelbar ist.

Einem weiteren Aspekt der Erfindung zufolge wird das Ziel erreicht durch ein Gespann mit einem Zugfahrzeug und einem Batterietransportanhänger wie oben beschrieben.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine Ansicht des Anhängers am Heck eines Zugfahrzeugs in Fahrtstellung;
- Fig. 2: eine Ansicht des Anhängers und des Hecks des Zugfahrzeugs in Ruhestellung;
- Fig. 3: eine Ansicht der Kupplung zwischen Zugfahrzeug und Anhänger; und
- Fig. 4: den Anhänger von vorn in Fahrtstellung.

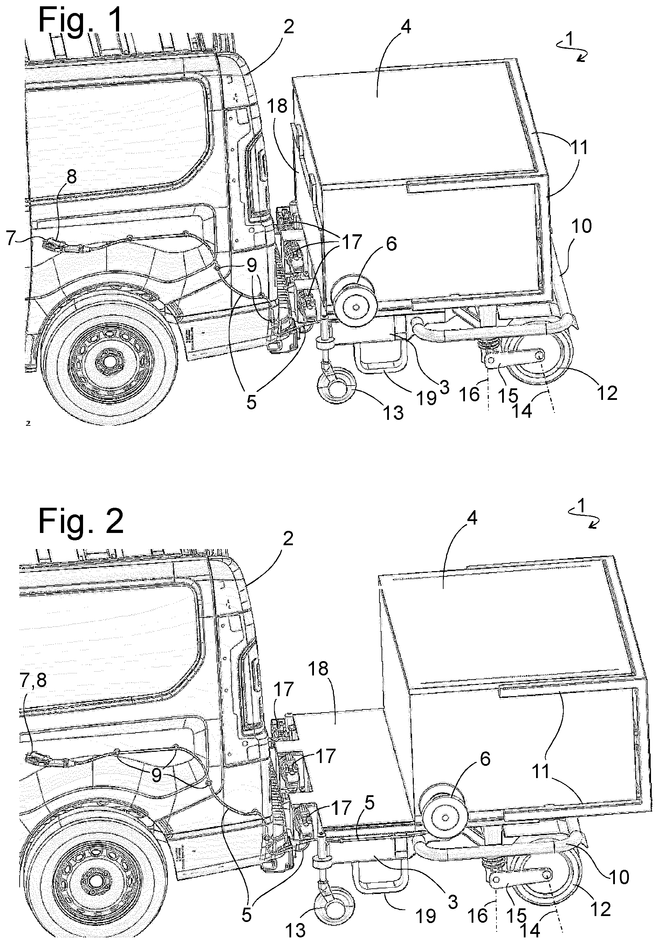

Fig. 1 zeigt einen erfindungsgemäßen Batterietransportanhänger 1, angekoppelt am Heck eines Kleintransporters als Zugfahrzeug 2. Ein Chassis 3 des Anhängers 1 ist größtenteils unter einem darauf ruhenden Batterieblock 4 verborgen. Der Batterieblock 4 enthält wenigstens eine, typischerweise mehrere wiederaufladbare Batterien. Er hat hier die Form einer Kiste, die geöffnet werden kann, um Batterien ein- und auszuladen. Die Batterien im Batterieblock 4 sind leitend verbunden mit einem Ladekabel 5, das bei Nichtgebrauch auf einer am Batterieblock befestigten Kabeltrommel 6 aufgewickelt ist. In der Konfiguration der Fig. 1 ist das Ladekabel 5 so weit von der Kabeltrommel 6 abgewickelt, dass ein Ladestecker 8 am Ende des Ladekabels 5 eine Ladebuchse 7 des Zugfahrzeugs 2 kontaktiert. In dieser Stellung können die Batterien des Batterieblocks 4 das Zugfahrzeug 2 sowohl mit Antriebsenergie versorgen als auch eine Bordbatterie des Zugfahrzeugs 2 aufladen. Das Zugfahrzeug 2 kann daher Strecken, die die Reichweite seiner Bordbatterie übersteigen, ohne nennenswerte Unterbrechung zurücklegen, indem kurz vor deren Erschöpfung der Batterietransportanhänger 1 angekoppelt und solange mitgenommen wird, bis die Bordbatterie wieder aufgeladen ist.

Um zu verhindern, dass beim Aufladen während der Fahrt das Ladekabel 5 an die Flanke des Zugfahrzeugs 2 anschlägt, ist es zwischen der Ladebuchse und der Kabeltrommel 6 an mehreren Stellen an der Flanke durch Haftelemente 9 befestigt. Bei den Haftelementen 9 kann es sich insbesondere um Saugnäpfe handeln. Damit sie das Aufwickeln des Kabels auf die Kabeltrommel 6 nicht behindern, können sie vom Ladekabel 5 lösbar oder vorzugsweise entlang des Ladekabels 5 verschiebbar sein, z.B. indem sich das Ladekabel 5 durch Ösen der Haftelemente 9 erstreckt. So können diese bei Nichtgebrauch entlang des Kabels bis an den Ladestecker 8 verschoben sein.

Das Chassis 3 trägt eine Stoßstange 10, die im hinteren Bereich des Anhängers 1 seitwärts und nach hinten über den Batterieblock 4 übersteht, um diesen im Kollisionsfall zu schützen. Als weiterer Schutz kann der Batterieblock nach hinten und zu den Seiten durch ein Gestell 11 abgeschirmt sein, dessen Profile sich entlang der Kanten des Batterieblocks 4 erstrecken und an dessen in Fig. 1 nicht sichtbarer Rückseite ein Gitter bilden.

Unter dem Chassis 3 ist eines von zwei Laufrädern 12 des Anhängers 1 sowie ein Stützrad 13 zu erkennen. Eine Drehachse des Laufrads 12 ist als Nachlaufachse 14 ausgebildet, d.h. sie ist mit dem Chassis über einen Lenker 15 verbunden, der seinerseits um eine vertikale Achse 16 drehbar mit dem Chassis 3 verbunden ist. Die beiden Achsen 14,16 kreuzen einander nicht, so dass der Lenker 15 bei Geradeausfahrt die in der Fig. 1 gezeigte Orientierung einnimmt, in der die Drehachse 14 der vertikalen Achse 16 nachläuft. Der Lenker 15 ist gefedert schwenkbar.

Das Stützrad 13 ist in an sich bekannter Weise vertikal verstellbar, so dass es, wenn der Anhänger 1 am Zugfahrzeug 2 abgestützt ist, für die Fahrt vom Boden abgehoben werden kann.

In der Fahrstellung der Fig. 1 liegt der Schwerpunkt des Batterieblocks 4 vor den Laufrädern 12, so dass ein Teil von dessen Gewicht über mehrere Anhängerkupplungen 17 die Hinterachse des Zugfahrzeugs 2 belastet.

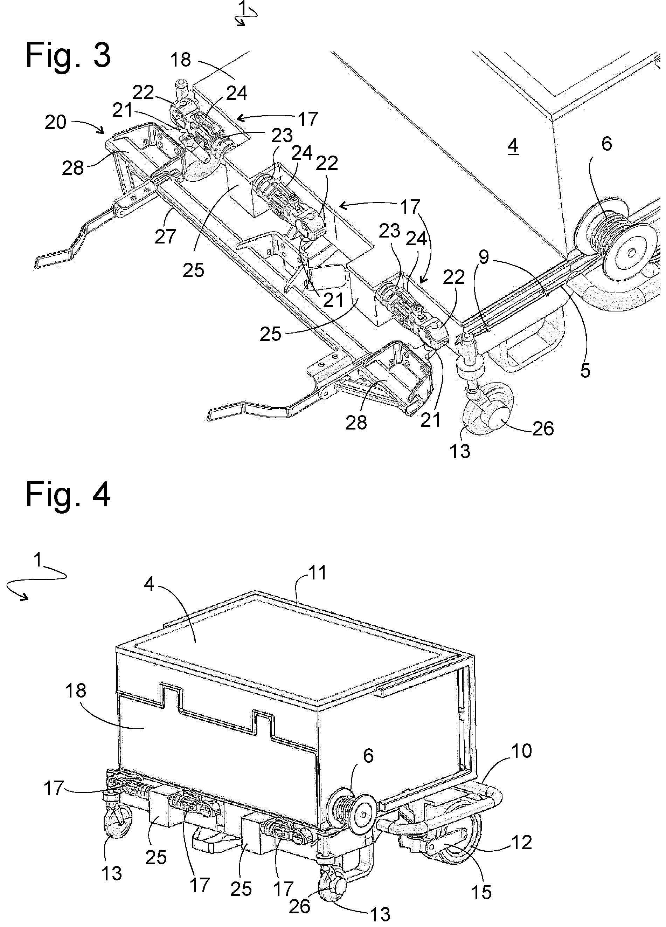

Der Batterieblock 4 ist auf dem Chassis 3 zwischen der in Fig. 1 gezeigten Fahrstellung und einer in Fig. 2 gezeigten Ruhestellung verstellbar. In der Ruhestellung ist der Batterieblock 4 nach hinten verschoben, so dass seine Rückseite und ein Großteil des mit dem Batterieblock 4 mitbewegten Gestells 11 nach hinten über die Stoßstange 10 übersteht. Eine in Fig. 1 und gut sichtbar in Fig. 4 in hochgeklappter Stellung an einer Vorderseite des Batterieblocks 4 gezeigte Bodenplatte 18 ist eine horizontal auf einem vorderen Teil des Chassis 3 aufliegende Stellung heruntergeklappt.

Ein Bügel erstreckt sich vom Chassis 3 nach unten, um eine Trittstufe 19 zu bilden, die einem Benutzer das Besteigen der Bodenplatte 18 erleichtern soll. Wenn der Benutzer auf der Bodenplatte 18 steht, kann er das Schloss einer (nicht dargestellten) zweiflügeligen Heckklappe des Zugfahrzeugs 2 bequem erreichen, um diese zu öffnen und die Flügel zur Seite, typischerweise um ca. 270° bis in eine an den Flanken des Zugfahrzeugs 2 anliegende Stellung zu schwenken. So ist ein freier Zugang zum Laderaum des Zugfahrzeugs 2 möglich, ohne dass dafür der Anhänger 1 abgekoppelt oder ein laufender Ladevorgang unterbrochen werden muss.

Eine weitere Batterie kann im Chassis 3 des Anhängers in einem Bereich untergebracht sein, der in der Fahrtstellung vom Batterieblock 4 und in der Ruhestellung von der Bodenplatte 18 überdeckt ist, so dass sie von oben zugänglich ist, wenn in der Ruhestellung die Bodenplatte 18 hochgeklappt ist.

Fig. 3 zeigt in einer detaillierten Ansicht die Verbindung zwischen dem Zugfahrzeug 2 und dem Anhänger 1. Auf Seiten des Zugfahrzeugs 2 umfasst die Verbindung einen Querträger 20, der sich im Wesentlichen über die gesamte Breite des Zugfahrzeugs erstreckt. Drei Kugelköpfe 21 sind an dem Querträger 20 befestigt. Einer von diesen ist in an sich üblicher Weise in der Mitte des Querträgers 20 befestigt; dieser kann nicht nur für den Anhänger 1, sondern auch für einen herkömmlichen, gierbeweglich an das Zugfahrzeug 2 gekoppelten Anhänger genutzt werden. Die anderen beiden Kugelköpfe 21 befinden sich jeweils an den Enden des Querträgers 20.

Wie in Fig. 3 gezeigt, kann der Querträger 20 zusammengesetzt sein aus einem Mittelstück 27, bei dem es sich serienmäßig am Zugfahrzeug 2 vorhandenes Bauteil handelt, das als Träger für den mittig angeordneten Kugelkopf 21 einer herkömmliche Anhängerkupplung vorgesehen ist, und zwei Anbauteilen 28, die jeweils einen Kugelkopf 21 tragen und das Mittelstück 27 jeweils zur Seite verlängern, um so den Abstand zwischen den Kugelköpfen zu maximieren.

Den drei Kugelköpfen 21 entsprechen drei Aufnahmen 22 der drei Anhängerkupplungen 17 am Anhänger 1. Diese Aufnahmen 22 sind von an sich bekannter Bauart mit einer nach unten offenen Schale, die über einen Kugelkopf 21 gestülpt werden kann. An einer Stange 23, die die Aufnahme 22 mit dem Chassis 3 verbindet, ist ein Spannhebel 24 angebracht, mit dem Klemmbacken eines Stabilisators in der Aufnahme 22 am Kugelkopf 21 festgeklemmt werden können. Einzeln könnte eine jede dieser Aufnahmen 22 auch an einem gierbeweglichen Anhänger Verwendung finden, wobei dann die Stange 23 im Betrieb sich von der Aufnahme 22 nach hinten erstreckt und auf Zug belastet ist. Anders als bei einem solchen Anhänger üblich erstrecken sich die Stangen 23 hier jeweils von der Aufnahme 22 in seitlicher Richtung zu Vorsprüngen 25 des Chassis 3. In der Stellung der Fig. 2 und 3 reicht die Bodenplatte 18 bis über die Vorsprünge 25, und die Spannhebel 24 sind für eine Person, die sich auf der Bodenplatte 18 befindet, durch Ausschnitte in der Bodenplatte 18 zugänglich.

Die Aufnahmen 22 sind entlang einer in Fahrzeugquerrichtung verlaufenden geraden Linie angeordnet und erlauben so eine Nickbewegung des Anhängers 1 relativ zum Zugfahrzeug 2. Gier- und Rollbewegungen sind nicht möglich. Fahrbahnunebenheiten quer zur Fahrtrichtung, die bei einer herkömmlichen Anhängerkupplung über einen einzelnen Kugelkopf eine Rollbewegung des Anhängers bewirken würden, werden hier durch eine Nickbewegung der Lenker 15 aufgefangen. Wenn das Zugfahrzeug 2 eine Kurve durchfährt, schwenkt der Batterietransportanhänger 1 zur Seite aus, wobei sich die Ausrichtung der Lenker 15 und Nachlaufachsen 14 infolge der Fahrbewegung selbsttätig anpasst. Da die Länge des Anhängers 1 gering ist, vergrößert das Ausschwenken einen seitlich vom Zugfahrzeug 2 benötigten Sicherheitsabstand nur unwesentlich, so dass das Zugfahrzeug 2 mit dem Batterietransportanhänger 1 kaum anders zu manövrieren ist als ohne, und das Fahren mit dem Anhänger 1 daher auch für einen ungeübten Fahrer keine Schwierigkeiten bereitet.

Fig. 4 zeigt den Batterietransportanhänger 1 in vom Zugfahrzeug 2 abgekoppeltem Zustand. Der Batterieblock 4 sollte sich im abgekoppelten Zustand wie gezeigt in Fahrtstellung befinden, um sicher zu sein, dass auch dann, wenn die Laufräder 12 unter dem Chassis 3 nach vorn geschwenkt sind, der Schwerpunkt des Anhängers 1 über einem von Bodenkontaktpunkten von Lauf- und Stützrädern 12, 13 aufgespannten Vieleck liegen und der Anhänger 1 nicht spontan umkippen kann.

Es können wie in Fig. 4 gezeigt zwei Stützräder 13 an den vorderen Ecken des Chassis 3 oder ein einzelnes Stützrad in der Mitte von dessen Vorderkante vorgesehen sein.

Wenn sich der Batterieblock 4 in der Fahrstellung befindet, trägt jedes Stützrad 13 einen beträchtlichen Anteil des Gewichts des Batterieblocks 4. Dies macht es schwierig, wenn der Anhänger von Hand bewegt werden muss, das Stützrad 13 über eine Bodenerhebung hinwegzubewegen. Um den Anhänger 1 im abgekoppelten Zustand leichter handhabbar zu machen, ist jedem Stützrad 13 ein Elektromotor 26 zugeordnet, der gesteuert werden kann, um eine vom Benutzer gewünschte Bewegung des Anhängers 1 anzutreiben oder zu unterstützen.

### Bezugszeichen

- 1: Batterietransportanhänger
- 2: Zugfahrzeug
- 3: Chassis
- 4: Batterieblock
- 5: Ladekabel
- 6: Kabeltrommel
- 7: Ladebuchse
- 8: Ladestecker
- 9: Haftelement
- 10: Stoßstange
- 11: Gestell
- 12: Laufrad
- 13: Stützrad
- 14: Nachlaufachse
- 15: Lenker
- 16: vertikale Achse
- 17: Anhängerkupplung
- 18: Bodenplatte
- 19: Trittstufe
- 20: Querträger
- 21: Kugelkopf
- 22: Aufnahme
- 23: Stange
- 24: Spannhebel
- 25: Vorsprung
- 26: Elektromotor
- 27: Mittelstück
- 28: Anbauteil

## Patentansprüche

1. Batterietransportanhänger (1) für ein Zugfahrzeug mit einem Chassis (3) zum Tragen eines Batterieblocks (4) und an dem Chassis (3) befestigten Laufrädern (12), wobei das Chassis (3) eine zumindest in Gierrichtung drehfeste Kupplung zum Ankoppeln an ein Zugfahrzeug (2) aufweist und jedes Laufrad (12) mit dem Chassis (3) über wenigstens eine Nachlaufachse (14) verbunden ist, **dadurch gekennzeichnet, dass** der Batterieblock (4) in Längsrichtung entlang des Chassis (3) zwischen einer Fahrstellung und einer Ruhestellung verstellbar ist.

2. Batterietransportanhänger nach Anspruch 1, bei dem die Anhängerkupplung wenigstens zwei, vorzugsweise drei, Aufnahmen (22) für je einen am Zugfahrzeug (2) festen Kugelkopf (21) umfasst.

3. Batterietransportanhänger nach Anspruch 2, bei dem jede Aufnahme (22) einen Stabilisator mit an den Kugelkopf (21) anklemmbaren Backen umfasst und ein Hebel (25) zum Verstellen der Backen zwischen einer Klemmstellung und einer den Kugelkopf (21) freigebenden Stellung in Querrichtung versetzt neben der Aufnahme (22) vorgesehen ist.

4. Batterietransportanhänger nach einem der vorhergehenden Ansprüche, ferner mit wenigstens einem elektrisch angetriebenen Stützrad (13).

5. Batterietransportanhänger nach einem der vorhergehenden Ansprüche, bei dem in der Ruhestellung der Abstand des Batterieblocks (4) vom Zugfahrzeug (2) größer ist als in der Fahrstellung.

6. Batterietransportanhänger nach einem der vorhergehenden Ansprüche, bei dem in der Ruhestellung der A-stand des Batterieblocks (4) vom Zugfahrzeug (2) ausreichend ist, um das Öffnen einer Heckklappe des Zugfahrzeugs (2) zu ermöglichen.

7. Batterietransportanhänger nach einem der vorhergehenden Ansprüche, bei dem in der Ruhestellung eine Bodenplatte (18) vor dem Batterieblock (4) frei liegt.

8. Batterietransportanhänger nach Anspruch 7, bei dem am Chassis (3) eine Trittstufe (19) zum erleichterten Besteigen der Bodenplatte (18) vorgesehen ist.

9. Batterietransportanhänger nach Anspruch 7 oder 8, bei dem die Bodenplatte (18) an den Batterieblock (4) angelenkt und beim Übergang in die Fahrstellung in eine aufrechte Stellung schwenkbar ist.

10. Batterietransportanhänger nach einem der der vorhergehenden Ansprüche, mit einer hinteren Stoßstange (10), wobei der Batterieblock (4) in der Fahrstellung vor der Stoßstange (10) angeordnet ist und optional in der Ruhestellung über die Stoßstange (10) nach hinten übersteht.

11. Batterietransportanhänger nach einem der vorhergehenden Ansprüche, mit einem mit dem Batterieblock (4) elektrisch verbundenen Ladekabel (5), das in an ein Zugfahrzeug (2) angekoppeltem Zustand mit einer Ladebuchse (7) des Zugfahrzeugs (2) verbindbar ist.

12. Batterietransportanhänger nach Anspruch 11, bei dem das Ladekabel (5) mit Haftelementen (9) zum zeitweiligen Anheften an eine Karosserie des Zugfahrzeugs (2) besetzt ist.

13. Batterietransportanhänger nach Anspruch 11 oder 12, mit einer Kabeltrommel (6), von der das Ladekabel (5) abwickelbar ist.

14. Gespann mit einem Zugfahrzeug (2) und einem Batterietransportanhänger (1) nach einem der vorhergehenden Ansprüche.

## Claims

1. Battery transport trailer (1) for a towing vehicle with a chassis (3) for supporting a battery block (4) and running wheels (12) fastened to the chassis (3), wherein the chassis (3) a at least in the yaw direction rotationally fixed coupling for coupling to a towing vehicle (2) and each running wheel (12) with the chassis (3) via at least one trailing axle (14) is connected, **characterized in that** the battery block (4) in the longitudinal direction along the chassis (3) between a driving position and a rest position is adjustable

2. Battery transport trailer according to Claim 1, in which the trailer coupling comprises at least two, preferably three, receptacles (22) for in each case one ball head (21) fixed to the towing vehicle (2).

3. Battery transport trailer according to claim 2, wherein each receptacle (22) comprises a stabilizer with jaws which can be clamped to the ball head (21) and a lever (25) for adjusting the jaws between a clamping position and a position releasing the ball head (21) is provided transversely offset next to the receptacle (22).

4. Battery transport trailer according to any preceding claim, further comprising at least one electrically driven support wheel (13).

5. Battery transport trailer according to any one of the preceding claims,
wherein in the rest position the distance of the battery block (4) from the towing vehicle (2) is greater than in the driving position.

6. Battery transport trailer according to any one of the preceding claims,
wherein, in the rest position of the battery block (4) from the towing vehicle (2) is sufficient distance to allow the opening of a tailgate of the towing vehicle (2).

7. Battery transport trailer according to any one of the preceding claims,
wherein in the rest position a bottom plate (18) in front of the battery block (4) is exposed.

8. Battery transport trailer according to claim 7, in which a step (19) is provided on the chassis (3) for easier climbing of the bottom plate (18).

9. Battery transport trailer according to claim 7 or 8, wherein the bottom plate (18) on the battery block (4) is articulated and on the transition into the driving position in an upright position is pivotable.

10. Battery transport trailer according to any one of the preceding claims, with a rear bumper (10), wherein the battery block (4) in the traveling position in front of the bumper (10) is arranged and optionally in the rest position by means of the bumper (10) projects rearwards.

11. Battery transport trailer according to one of the preceding claims, having a charging cable (5) which is electrically connected to the battery block (4) and which, in the state coupled to a towing vehicle (2), can be connected to a charging socket (7) of the towing vehicle (2).

12. Battery transport trailer according to claim 11, wherein the charging cable (5) with adhesive elements (9) for the temporary attachment to a body of the towing vehicle (2) is occupied.

13. Battery transport trailer according to claim 11 or 12, with a cable drum (6), from which the charging cable (5) can be unwound.

14. Couple with a towing vehicle (2) and a battery transport trailer (1) according to any one of the preceding claims.

## Revendications

1. Remorque de transport de batterie (1) pour un véhicule tracteur, comprenant un châssis (3) pour supporter un bloc de batterie (4) et des roues de roulement (12) fixées au châssis (3), le châssis (3) présentant un accouplement au moins fixe en rotation dans le sens du lacet pour l'accouplement à un véhicule tracteur (2) et chaque roue de roulement (12) étant reliée au châssis (3) par au moins un axe de poursuite (14), **caractérisée en ce que** le bloc de batterie (4) est réglable dans le sens longitudinal le long du châssis (3) entre une position de déplacement et une position de repos

2. Remorque de transport de batteries selon la revendication 1, dans laquelle l'attelage de remorque comprend au moins deux, de préférence trois, logements (22) pour une tête sphérique (21) fixée sur le véhicule tracteur (2).

3. Remorque de transport de batterie selon la revendication 2, dans laquelle chaque logement (22) comprend un stabilisateur avec des mâchoires pouvant être serrées contre la tête à bille (21), et un levier (25) pour déplacer les mâchoires entre une position de serrage et une position libérant la tête à bille (21) est prévu décalé transversalement à côté du logement (22).

4. Remorque de transport de batterie selon l'une quelconque des revendications précédentes, comprenant en outre au moins une roue de support entraînée électriquement (13).

5. Remorque de transport de batterie selon l'une quelconque des revendications précédentes, dans laquelle, dans la position de repos, la distance entre le bloc de batterie (4) et le véhicule tracteur (2) est plus grande que dans la position de déplacement.

6. Remorque de transport de batterie selon l'une quelconque des revendications précédentes, dans laquelle, dans la position de repos, la distance entre le bloc de batterie (4) et le véhicule tracteur (2) est suffisante pour permettre l'ouverture d'un hayon du véhicule tracteur (2).

7. Remorque de transport de batterie selon l'une quelconque des revendications précédentes, dans laquelle, dans la position de repos, une plaque de fond (18) est exposée devant le bloc de batterie (4).

8. Remorque de transport de batterie selon la revendication 7, dans laquelle il est prévu sur le châssis (3) un marchepied (19) pour monter plus facilement sur la plaque de fond (18).

9. Remorque de transport de batterie selon la revendication 7 ou 8, dans laquelle la plaque de fond (18) est articulée sur le bloc de batterie (4) et peut pivoter dans une position verticale lors du passage à la position de déplacement.

10. Remorque de transport de batterie selon l'une quelconque des revendications précédentes, comprenant un pare-chocs arrière (10), le bloc de batterie (4) étant disposé devant le pare-chocs (10) dans la position de déplacement et faisant éventuellement saillie vers l'arrière au-delà du pare-chocs (10) dans la position de repos.

11. Remorque de transport de batterie selon l'une des revendications précédentes, comprenant un câble de charge (5) relié électriquement au bloc de batterie (4), qui peut être relié dans l'état couplé à un véhicule tracteur (2) à une prise de charge (7) du véhicule tracteur (2).

12. Remorque de transport de batterie selon la revendication 11, dans laquelle le câble de charge (5) est pourvu d'éléments d'adhérence (9) pour une fixation temporaire à une carrosserie du véhicule tracteur (2).

13. Remorque de transport de batterie selon la revendication 11 ou 12, comprenant un tambour de câble (6) à partir duquel le câble de charge (5) peut être déroulé.

14. Attelage comprenant un véhicule tracteur (2) et une remorque de transport de batterie (1) selon l'une quelconque des revendications précédentes.
